# EUROPÄISCHE PATENTSCHRIFT

(11) **EP 0 885 762 B1**
(45) Veröffentlichungstag und Bekanntmachung des Hinweises auf die Patenterteilung: **24.03.2004**
(21) Anmeldenummer: 98108868.5
(22) Anmeldetag: 15.05.1998
(51) Int. Cl.: B60J 10/02, B60J 10/00

(54) **Befestigungsanordnung am dem Rand einer Scheibe, insbesondere Kraftfahrzeugfenster-Scheibe**
Mounting arrangement at the edge portion of a window pane, especially motor vehicle window
Dispositif de fixation à la périphérie d'une feuille de verre, en particulier vitre de véhicule automobile

(30) Priorität: 18.06.1997 DE 19725777
(43) Veröffentlichungstag der Anmeldung: 23.12.1998
(73) Patentinhaber: HENNIGES ELASTOMER- UND KUNSTSTOFFTECHNIK GMBH & CO KG, D-31547 Rehburg-Loccum (DE)
(72) Erfinder: Kreye, Bernhard, 31515 Wunstorf (DE)
(74) Vertreter: Jabbusch, Wolfgang, Dr.Jur. Jabbusch, Wehser & Lauerwald Patentanwälte

(56) Entgegenhaltungen:
- EP-A- 0 122 545
- DE-A- 2 658 660
- GB-A- 2 033 458
- GB-A- 2 219 822
- US-A- 4 858 988
- US-A- 4 925 237

## Beschreibung

Es ist bekannt, an der Außen- oder Innenseite einer Scheibe, insbesondere Kraftfahrzeugfenster-Scheibe, Anbauteile zu befestigen, die insbesondere zum Verbinden der Scheibe mit den Scheibeneinrahmungen bzw. mit der Kraftfahrzeugkarosserie dienen (siehe EP-A-0 122 545).

Der Erfindung liegt die Aufgabe zugrunde, eine derartige Befestigungsanordnung so auszubilden, daß die Durchsichtsfläche der Scheibe nur ganz geringförmig verkleinert wird.

In Lösung dieser Aufgabenstellung ist ein Verfahren gefunden worden, das dadurch gekennzeichnet ist, daß auf wenigstens einer Stirnseite der Scheibe ein Kleber aufgetragen wird, daß mittels aushärtender Vergußmasse, die in den Kleber-Auftrag gesetzt wird, ein Halteelement geformt wird, und daß mit dem Halteelement ein Funktionselement verbunden wird.

Damit wird erfindungsgemäß die Befestigungsanordnung an wenigstens einer Stirnseite der Scheibe angebracht, womit die Durchsichtsfläche der Scheibe nahezu nicht verkleinert wird, zumal die Befestigungsanordnung beidseitig nicht breiter ist, als die Scheibe selbst. Als Vergußmasse kann ein Zweikomponentenmaterial, wie etwa Polyurethan, verwendet werden. Die beiden Komponenten werden dann direkt vor der Verarbeitung gemischt, und über eine chemische Reaktion wird der feste Zustand erreicht. Es sind aber auch einkomponentige Systeme, die thermisch reagieren einsetzbar.

Nach einer Weiterbildung des Verfahrens wird so vorgegangen, daß die Vergußmasse in eine Form eingegeben wird, die zwei Formhälften aufweist, die, einander gegenüberliegend, auf die beiden Randseiten der Scheibe aufgesetzt werden und dabei an der Stirnseite der Scheibe gemeinsam die Gußform ausbilden.

Nachdem die Vergußmasse einen festen Zustand erreicht hat und der Kleber-Auftrag abgebunden ist, werden die Formhälften entfernt.

Das Funktionselement kann entsprechend der jeweils zu übernehmenden Funktion der Befestigungsanordnung ausgebildet sein. Nach einer Weiterbildung der Erfindung ist das Funktionselement als Dichtung ausgebildet. Angewendet auf eine auf- und abbewegbare Kraftfahrzeugscheibe dient eine solche Dichtung zum Abdichten der zum Schließen hochgefahrenen Scheibe des Kraftfahrzeugfensters.

Nach einer anderen Weiterbildung der Erfindung ist das Funktionselement als elektrischer Druckdetektor zum Schalten eines elektrischen Antriebs, insbesondere Antrieb zum Schließen einer Fahrzeugscheibe, ausgebildet.

Das Funktionselement kann auf das Halteelement aufgeklebt sein. Das Funktionselement kann aber auch auf das Halteelement aufgeklippt sein. Beide Befestigungsarten können miteinander kombiniert sein.

Bei weiteren Ausbildungen des Funktionselementes als elektrischer Druckdetektor gemäß Anspruchsfassung kann das Funktionselement ein Schlauchelement aufweisen, an dessen Innenseite im Scheitelpunkt ein nach unten gerichteter elektrischer Leiter angeordnet ist, der sich beim Zusammendrücken des Schlauchelementes an die elektrisch leitende Basis des Funktionselementes anlegt, wodurch bei entsprechender elektrischer Schaltung der elektrische Antrieb der Scheibe abgestellt wird.

Nach einer anderen Weiterbildung der Detektor-Ausbildung des Funktionselementes kann anstelle des Schlauchelementes ein elektrisch leitendes, vorzugsweise aus Metall gefertigtes Abdichtprofil angeordnet sein, das über einen elastischen und isolierenden Kleber mit der Basis des Funktionselementes verbunden ist. Bei Erreichen der Schließstellung bzw. vorher bei Berührung mit einem Hindernis, wird dieses Abdichtprofil gegen die Basis des Funktionselementes gedrückt, womit bei entsprechender elektrischer Schaltung, der elektrische Scheibenantrieb abgestellt wird.

Ausführungsbeispiele der Erfindung, aus denen sich weitere erfinderische Merkmale ergeben, sind in der Zeichnung dargestellt. Es zeigen:
- Fig. 1: eine teilweise Seitenansicht des hinteren Türbereiches eines Personenkraftwagens mit einer auf- und abbewegbaren Scheibe und mit einer fest eingebauten Dreieckscheibe,
- Fig. 2: einen vergrößerten Schnitt längs der Linie II-II in Fig. 1 mit einem auf der bewegbaren Scheibe angeordneten Halteelement,
- Fig. 2a: den Verfahrensschritt der Ausformung des Halteelementes bei der Befestigungsanordnung gemäß Fig. 2,
- Fig. 3: einen vergrößerten Schnitt längs der Linie III-III in Fig. 1 mit der Anordnung eines Abdichtprofils auf dem Halteelement der Dreieckscheibe,
- Fig. 4: ein zweites Ausführungsbeispiel der Befestigungsanordnung mit einer Einklemmschutz-Funktionsanordnung auf dem Halteelement,
- Fig. 5: ein drittes Ausführungsbeispiel der Befestigungsanordnung mit einer Einklemmschutz-Funktionsanordnung auf dem Halteelement und
- Fig. 6: ein viertes Ausführungsbeispiel der Befestigungsanordnung mit einer Einklemmschutz-Funktionsanordnung auf dem Halteelement.

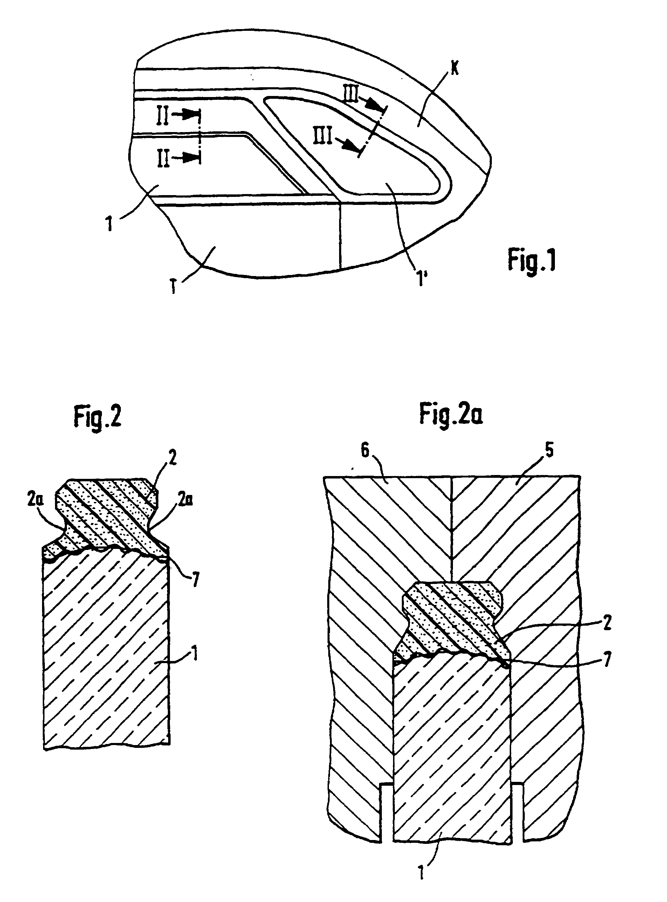

Fig. 1 zeigt den hinteren Türbereich eines Personenkraftwagens mit einer Tür T und einer darin angeordneten elektro-mechanisch auf- und abbewegbaren Scheibe 1 sowie mit einer in der Karosserie K des Personenkraftwagens fest eingebauten Dreieckscheibe 1'.

Fig. 2 zeigt in einem Schnitt längs der Linie II-II in Fig. 1, die erfindungsgemäße Anordnung eines aus Vergußmasse gefertigten Halteelementes 2 auf dem stirnseitigen Rand der Scheibe 1, wobei die Verbindung des Halteelementes 2 mit der Scheibe 1 durch einen Kleber 7 erfolgt. Das Halteelement 2 ist an der freien Stirnseite abgeflacht. An den Seiten weist es halbrunde Rastausnehmungen 2a auf. Die Fig. 2a zeigt, wie diese Anordnung hergestellt wird. Zunächst wird auf den stirnseitigen Rand der Scheibe 1 ein Kleber 7 aufgebracht. dann werden auf den Randbereich der Scheibe 1 Formhälften 5 und 6 aufgesetzt, derart, daß diese auf beiden Seiten des Scheibenrandes an der Scheibe anliegen und außerhalb der Scheibe aneinanderliegen, wobei sie oberhalb des stirnseitigen Randes der Scheibe 1 die Gießform für das Halteelement 2 ausbilden. In einem nächsten Verfahrensschritt wird in die so gebildete Gießform über nicht eingezeichnete Kanäle eine Vergußmasse eingefüllt bzw. eingespritzt, womit das Halteteil 2 hergestellt wird. Nach Aushärten der Vergußmasse und Abbinden des Klebers werden die Formhälften 5 und 6 entfernt.

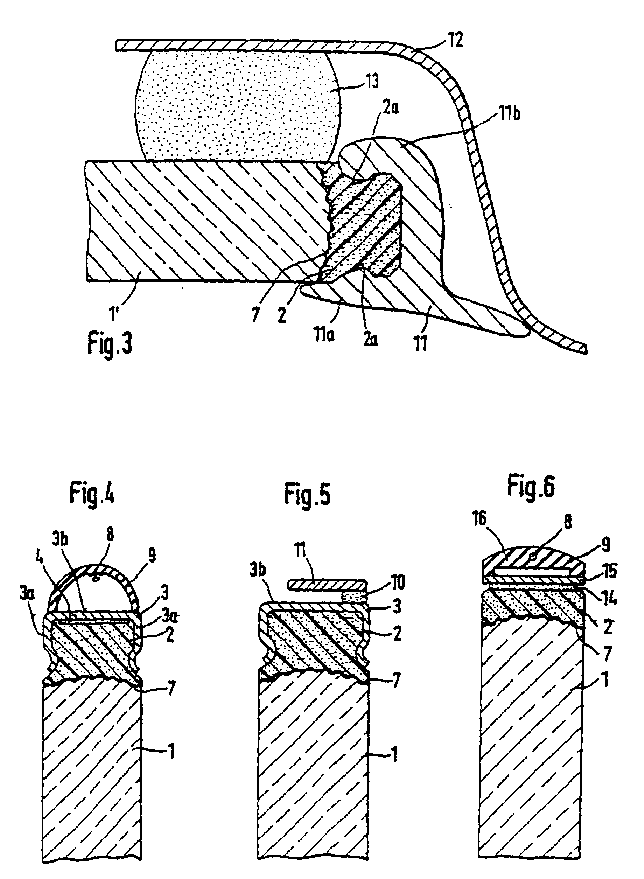

Fig. 3 zeigt ein erstes Anwendungsbeispiel der Befestigungsanordnung bei der in der Karosserie K fest eingebauten Dreieckscheibe 1' gemäß Fig. 1. Die Scheibe 1' ist in bekannter Weise mit einem Einbaukleber 13 auf den Karosserieflansch 12 geklebt. Auf das erfindungsgemäße Halteelement 2 ist ein Abdichtprofil 11 aufgesteckt, das den Zwischenraum zwischen der Scheibe 1' und dem Karosserieflansch 12 abdeckt. Zur Aufsteck-Befestigung weist das Abdichtprofil 11 an seiner Rückseite eine an die Umrißform des Halteelementes 2 angepaßte U-förmige Ausnehmung mit U-Flanschen 11a und 11b auf. Bei der Montage wird das Abdichtprofil 11 auf das Halteelement 2 aufgeklippt, wobei die U-Flansche 11a und 11b in die Rastausnehmungen 2a des Halteelementes 2 rastend eingreifen.

Fig. 4 bis 6 zeigen weitere Anwendungen der Erfindung mit Einklemmschutz-Funktionsanordnungen. Bei dem Ausführungsbeispiel nach Fig. 4 besteht die Basis des Funktionselementes aus einem U-Profil-Metallband 3, das mit seinen U-Schenkeln 3a das Halteelement 2 beidseitig umfaßt, wobei die U-Schenkel mit entsprechenden Vorsprüngen in die Rastausnehmungen 2a des Halteelementes 2 formschlüssig einrasten. Zusätzlich ist das Metallband 3 mit einem Kleber 4 an der flachen Stirnseite des Halteelementes 2 angeklebt. Auf der freien Basisfläche 3b des Metallbandes 3 ist ein vorgewölbter, elastischer Schlaukörper 9 angeordnet. Auf der Innenseite des Schlauchkörpers 9 verläuft in seinem Scheitelbereich ein blanker elektrischer Leiter 8. Bewegt der elektrische Antrieb die Scheibe in Schließstellung, so wird der Schlauchkörper 9 bei Erreichen der Schließstellung oder schon vorher, wenn der Schlauchkörper auf ein Hindernis trifft, gegen die Basisfläche 3 b des Metallbandes 3 gedrückt, wodurch es zu einem elektrischen Kontakt zwischen dem elektrischen Leiter 8 und der elektrisch leitenden Basisfläche kommt, was bei entsprechender elektrischer Schaltung dazu genutzt wird, daß in einem solchen Fall der elektrische Scheibenantrieb sofort abgeschaltet wird.

Bei dem Ausführungsbeispiel nach Fig. 5 ist das Metallband 3 in gleicher Weise auf das Halteteil 2 aufgesetzt, wie bei dem Beispiel gemäß Fig. 4. Auf die Basisfläche 3b des Metallbandes ist hier seitlich eine dauerelastische Kleberaupe 10 aufgelegt, und auf diese Kleberaupe ist ein flaches metallisches Abdichtprofil 11 derart aufgesetzt, daß es in einem geringen Abstand parallel zur Basisfläche 3b des Metallbandes 3 ausgerichtet ist. Beim Schließen der Scheibe 1 wird bei Erreichen der Endstellung oder vorher bei Berühren mit einem Hindernis das Abdichtprofil 11 gegen die Basisfläche 3b gedrückt, womit bei entsprechender elektrischer Schaltung ein elektrischer Kontakt hergestellt und der elektrische Antrieb der Scheibe abgestellt wird.

Bei dem Ausführungsbeispiel nach Fig. 6 ist auf die flache Stirnseite des Halteelementes 2 unter Vermittlung eines Klebers 14 eine Metallfolie 15 aufgeklebt. Auf der Metallfolie 15 ist wieder ein Schlauchkörper 9 angeordnet. In Abweichung von der Ausführung in Fig. 4 ist der Schlauchkörper 9 so ausgebildet, daß der elektrische Leiter 8 im Scheitelbereich 16 des Schlauchkörpers 9 in den Schlauchkörper 9 eingebettet liegt. Im Scheitelbereich 16 ist der Schlauchkörper 9 durch Einlagerung elektrisch leitender Teilchen in das elastische Material elektrisch leitend gemacht, so daß auch hier, bei Erreichen der Schließstellung der Scheibe oder zuvor, bei Auftreffen der Scheibe auf ein Hindernis, der Schlauchkörper 9 gegen die Metallfolie gedrückt wird, wodurch es zu einem elektrischen Kontakt kommt, der das Abstellen des elektrischen Scheibenantriebes bewirkt.

## Patentansprüche

1. Verfahren zum Herstellen einer Befestigungsanordnung an dem Rand einer Scheibe (1), insbesondere Kraftfahrzeugfenster-Scheibe,
**dadurch gekennzeichnet,**
**daß** auf wenigstens einer Stirnseite der Scheibe (1) ein Kleber (7) aufgetragen wird, daß mittels aushärtender Vergußmasse, die in den Kleber-Auftrag gesetzt wird, ein Halteelement (2) auf die Stirnseite der Scheibe geformt wird, und daß mit dem Halteelement (2) ein Funktionselement verbunden wird.

2. Verfahren nach Anspruch 1, **dadurch gekennzeichnet, daß** die Vergußmasse in eine Form eingegeben wird, die zwei Formhälften (5, 6) aufweist, die, einander gegenüberliegend auf die beiden Randseiten der Scheibe (1) aufgesetzt werden und dabei an der Stirnseite der Scheibe gemeinsam die Gußform ausbilden.

3. Bei der Durchführung des Verfahrens nach Anspruch 1 oder 2 zu verwendendes Funktionselement, **dadurch gekennzeichnet, daß** es als Dichtung ausgebildet ist.

4. Bei der Durchführung des Verfahrens nach Anspruch 1 oder 2 zu verwendendes Funktionselement, **dadurch gekennzeichnet, daß** es als elektrischer Druckdetektor zum Schalten eines elektrischen Antriebs, insbesondere Antrieb zum Schließen einer Fahrzeugscheibe, ausgebildet ist.

5. Funktionselement nach Anspruch 3 oder 4, **dadurch gekennzeichnet, daß** es auf das Halteelement (2) aufgeklebt ist.

6. Funktionselement nach Anspruch 3 oder 4, **dadurch gekennzeichnet, daß** es auf das Halteelement (2) aufgeklippt ist.

7. Funktionselement nach Anspruch 6, **dadurch gekennzeichnet, daß** die Basis des Funktionselementes U-förmig ausgebildet ist und daß die U-Schenkel (3a) der Basis das Halteelement (2) beidseitig übergreifen und in seitliche Ausnehmungen (2a) des Halteelementes formschlüssig einrasten.

8. Funktionselement nach Anspruch 4 und einem der Ansprüche 5 bis 7, **dadurch gekennzeichnet, daß** die Basisfläche (3b) des Funktionselementes aus elektrisch leitendem Material, vorzugsweise Metall, besteht und daß auf der Basis ein hochgewölbtes elastisches Schlauchelement (9) angeordnet ist, an dessen Innenseite, etwa im Scheitelpunkt, ein nach unten vorstehender elektrischer Leiter (8) angeordnet ist.

9. Funktionselement nach Anspruch 4 und einem der Ansprüche 5 bis 7, **dadurch gekennzeichnet, daß** die Basisfläche (3b) des Funktionselementes aus elektrisch leitendem Material, vorzugsweise Metall, besteht und daß in geringem Abstand über der Basisfläche (3b) ein elektrisch leitendes, vorzugsweise aus Metall gefertigtes Abdichtprofil (11) angeordnet ist, das über einen elastischen und isolierenden Kleber (10) mit der Basis des Funktionselementes verbunden ist.

10. Funktionselement nach Anspruch 4 und einem der Ansprüche 5 bis 7, **dadurch gekennzeichnet, daß** es auf das Halteelement (2) aufgeklebt ist, daß die Basis des Funktionselementes aus elektrisch leitendem Material, vorzugsweise Metall, besteht, das auf der Basis ein hochgewölbtes, elektrisches Schlauchelement (9) angeordnet ist, daß im Scheitelbereich (16) des Schlauchelementes ein elektrischer Leiter (8) eingebettet ist, und daß das Material des Schlauchköprers im Umgebungsbereich des elektrischen Leiters (8) durch Beimischung elektrischer Bestandteile elektrische Leitfähigkeit aufweist.

## Claims

1. Method for producing a mounting arrangement at the edge portion of a window pane (1), especially a motor-vehicle window, **characterized in that** an adhesive (7) is applied on at least one end face of the pane (1), **in that** a holding element (2) is moulded on the end face of the pane by means of curing cashing compound, which is set into the adhesive application, and **in that** a functional element is connected to the holding element (2).

2. Method according to Claim 1, **characterized in that** the casting compound is introduced into a mould which has two mould halves (5, 6), which are placed lying opposite each other onto the two sides at the edge portion of the pane (1) and thereby together form the casting mould on the end face of the pane.

3. Functional element to be used in the implementation of the method according to Claim 1 or 2, **characterized in that** it is formed as a seal.

4. Functional element to be used in the implementation of the method according to Claim 1 or 2, **characterized in that** it is formed as an electrical pressure detector for switching an electrical drive, in particular a drive for closing a vehicle window.

5. Functional element according to Claim 3 or 4, **characterized in that** it is adhesively attached on the holding element (2).

6. Functional element according to Claim 3 or 4, **characterized in that** it is clipped onto the holding element (2).

7. Functional element according to Claim 6, **characterized in that** the base of the functional element is formed in a U-shaped manner and **in that** the U legs (3a) of the base reach over the holding element (2) on both sides and positively engage in lateral recesses (2a) of the holding element.

8. Functional element according to Claim 4 and one of Claims 5 to 7, **characterized in that** the base area (3b) of the functional element consists of electrically conducting material, preferably metal, and in chat arranged on the base is an arched elastic tube element (9), on the inner side of which a downwardly projecting electrical conductor (8) is arranged approximately at the apex.

9. Functional element according to Claim 4 and one of Claims 5 to 7, **characterized in that** the base area (3b) of the functional element consists of electrically conducting material, preferably metal, and **in that** arranged at a small distance above the base area (3b) is an electrically conducting sealing profile (11), preferably produced from metal, which is connected to the base of the functional element by means of an elastic and insulating adhesive (10).

10. Functional element according to Claim 4 and one of Claims 5 to 7, **characterized in that** it is adhesively attached on the holding element (2), **in that** the base of the functional element consists of electrically conducting material, preferably metal, **in that** arranged on the base is an arched electrical tube element (9), **in that** an electrical conductor (8) is embedded in the apex region (16) of the tube element and **in that** the material of the tube body in the region surrounding the electrical conductor (8) has electrical conductivity as a result of the admixture of electrical constituents.

## Revendications

1. Procédé pour fabriquer un dispositif de fixation sur le bord d'une vitre (1), en particulier une vitre de véhicule automobile,
**caractérisé en ce que** sur au moins une face frontale de la vitre (1), on applique une colle (7), **en ce que** grâce à une masse de scellement durcissable qui est placée dans la couche de colle, on forme un élément de fixation (2) sur la face frontale de la vitre, et **en ce qu'**on relie un élément fonctionnel à l'élément de fixation (2).

2. Procédé selon la revendication 1, **caractérisé en ce qu'**on met la masse de scellement dans un moule comprenant deux moitiés (5, 6) que l'on pose l'une en face de l'autre sur les deux bords de la vitre (1) et qui forment ainsi ensemble le moule sur la face frontale de la vitre.

3. Elément fonctionnel à utiliser lors de la mise en oeuvre du procédé selon la revendication 1 ou 2, **caractérisé en ce qu'**il est conçu comme un joint d'étanchéité.

4. Elément fonctionnel à utiliser lors de la mise en oeuvre du procédé selon la revendication 1 ou 2, **caractérisé en ce qu'**il est conçu comme un détecteur de pression électrique pour actionner une commande électrique, en particulier une commande pour fermer une vitre de véhicule.

5. Elément fonctionnel selon la revendication 3 ou 4, **caractérisé en ce qu'**il est collé sur l'élément de fixation (2).

6. Elément fonctionnel selon la revendication 3 ou 4, **caractérisé en ce qu'**il est encliqueté sur l'élément de fixation (2).

7. Elément fonctionnel selon la revendication 6, **caractérisé en ce que** la base de l'élément fonctionnel a la forme d'un U et **en ce que** les branches en U (3a) de ladite base couvrent l'élément de fixation (2) des deux côtés et s'enclenchent par complémentarité de forme dans des creux latéraux (2a) de l'élément de fixation.

8. Elément fonctionnel selon la revendication 4 et selon l'une des revendications 5 à 7, **caractérisé en ce que** la surface de base (3b) de l'élément fonctionnel se compose d'un matériau conducteur d'électricité, de préférence du métal, et **en ce que** sur cette base est disposé un élément tubulaire élastique bombé (9) sur la face intérieur duquel - à peu près au sommet - est disposé un conducteur électrique (8) saillant vers le bas.

9. Elément fonctionnel selon la revendication 4 et selon l'une des revendications 5 à 7, **caractérisé en ce que** la surface de base (3b) de l'élément fonctionnel se compose d'un matériau conducteur d'électricité, de préférence du métal, et **en ce qu'**il est prévu à une faible distance au-dessus de ladite surface de base (3b) un profilé d'étanchéité (11) conducteur d'électricité, de préférence en métal, qui est relié à la base de l'élément fonctionnel à l'aide d'une colle (10) élastique et isolante.

10. Elément fonctionnel selon la revendication 4 et selon l'une des revendications 5 à 7, **caractérisé en ce que** l'élément fonctionnel est collé sur l'élément de fixation (2), **en ce que** sa base se compose d'un matériau conducteur d'électricité, de préférence du métal, **en ce qu'**un élément tubulaire électrique bombé (9) est disposé sur la base, **en ce qu'**un conducteur électrique (8) est encastré dans la zone du sommet (16) de l'élément tubulaire, et **en ce que** le matériau du corps tubulaire présente une conductibilité électrique dans la zone voisine du conducteur électrique (8) grâce à l'adjonction de composants électriques.
